# EUROPEAN PATENT SPECIFICATION

(11) **EP 2 557 869 B1**
(45) Date of publication and mention of the grant of the patent: **30.11.2016**
(21) Application number: 11177133.3
(22) Date of filing: 10.08.2011
(51) Int. Cl.: H04W 72/04

(54) **Method and apparatus to control HSDPA activation/de-activation**
Verfahren und Vorrichtung zur Steuerung der HSDPA-Aktivierung/-Deaktivierung
Procédé et appareil pour contrôler l'activation/désactivation HSDPA

(43) Date of publication of application: 13.02.2013
(73) Proprietor: BlackBerry Limited, Waterloo, ON N2K 0A7 (CA)
(72) Inventor: Ekici, Ozgur, Kanata, Ontario K2K 3K1 (CA)
(74) Representative: Moore, Barry

(56) References cited:
- EP-A2- 1 761 097
- WO-A1-2006/137779
- US-A1- 2006 146 750
- US-A1- 2007 049 308
- US-B2- 7 965 672

## Description

### FIELD OF THE DISCLOSURE

The present disclosure relates to High Speed Downlink Packet Access (HSDPA) operation, and in particular, the present disclosure relates to the activation and deactivation of HSDPA operation in a given wireless network configuration.

### BACKGROUND

HSDPA mode of operation, where the users utilize shared network resources, allows mobile devices to receive data at a higher rate than what is achievable utilizing dedicated channels (DCH) in Universal Mobile Telecommunications Service (UMTS) systems. This higher data rate is achieved, in part, by buffering and re-transmitting (if needed) data intended for a mobile device at a Node B of the serving cell, which is physically closer to the end user. Conversely, in dedicated channel mode of operation in a legacy network such as R99 (Frequency Division Duplexing [FDD] systems like Wideband Code Division Multiple Access [WCDMA]) or R4 (Time Division Duplexing [TDD] systems like Time Division Synchronous Code Division Multiple Access [TD-SCDMA]), the buffering of data intended for a mobile device is performed at the Radio Network Controller (RNC).

While HSDPA reduces latency and improves throughput performance by moving data re-transmission operations at the Node-B closer to the mobile user, the buffering of data at the Node B causes data loss during handover operations involving serving HSDPA cell change. Specifically, as a mobile device switches from a serving Node B (source) to another (target) Node-B, any data buffered at the source Node B is lost, and must be re-transmitted from the RNC to the target Node B. Moreover, hybrid automatic repeat request (HARQ) entities at the source Node B are deleted, and re-established at the target Node B. In HSDPA mode of operation the cell providing HSDPA services is called the "serving HSDPA cell". HSDPA operation does not support soft-handover where the UE receives data from multiple cells simultaneously. Therefore at any one time, there is only one serving HSDPA cell for a given UE. When the network sees the need to change the serving HSDPA cell (taking into account UE measurements of neighbouring and serving cells), the network has to cease and delete all HSDPA related parameters (buffers, HARQ queues) at the source cell and move these entities to the target HSDPA serving cell if it wants to continue HSDPA mode of operation.

These issues can increase latency and decrease throughput performance significantly, and particularly when a mobile device performs frequent handovers of the serving HSDPA cell, such as a mobile device moving at high speed, or a mobile device roaming around Node B boundaries.

EP 1761097 to Jeong et al. teaches to change CQI reporting modes based on the speed at which a UE is moving.

WO 2006/137779 to Ernstrom et al. teaches to not assign an HSDPA bearer for fast moving UEs.

US7965672B2 discloses a method and apparatus for cell selection, which can prevent the occurrence of an error in the cell selection in a mobile communication system supporting the hierarchical cell structure. The method includes: when the number of times of cell reselection during a cell reselection time period given to a particular User Equipment (UE) located within a micro cell exceeds a predetermined maximum number of times, determining if a sum of actual occupancy time intervals of the particular UE in Node Bs, services of which the particular UE has used up to then, is smaller than a predetermined value; and when the sum of actual occupancy time intervals of the particular UE in Node Bs, services of which the particular UE has used up to then, is smaller than the predetermined value, determining that the UE is in a low speed state and maintaining the micro cell as a service cell for the UE.

### SUMMARY

According to one aspect of the present disclosure, there is provided a method in accordance with claim 1. Additional advantageous features are disclosed in the dependent claims.

The claims also detail a user equipment (UE) provided in accordance with the present teaching.

Also detailed in the claims, and in accordance with yet another aspect of the present disclosure, is a network element.

### BRIEF DESCRIPTION OF THE DRAWINGS

The present disclosure will be better understood with reference to the drawings in which:
**Figure 1** is a simplified schematic diagram of a portion of a cellular network in which an embodiment of the present disclosure may be practiced;
**Figure 2** is a process diagram to determine whether a user equipment (UE) should prefer HSDPA mode of operation or not taking into account serving HSDPA cell change frequency;
**Figure 3** is a process diagram for determining, from a network perspective, whether a UE should be transitioned to DCH mode of operation or not;
**Figure 4** is a data flow diagram showing communication between a UE and network node when the UE initiate communication mode (i.e. from DCH to HSDPA or vice-versa) transition;
**Figure 5** is a process diagram showing a network node implemented method according to one embodiment of the present disclosure; and
**Figure 6** is a block diagram of an exemplary user equipment capable of being used with the embodiments of the present disclosure; and
**Figure 7** is a simplified block diagram of an exemplary network node.

### DETAILED DESCRIPTION

The present disclosure is described below with regards to various embodiments described herein. Such embodiments are not intended to be limiting and could be modified by those skilled in the art and still be within the scope of the present disclosure.

The present disclosure is directed to improving network performance for user equipments (UEs) which frequently change HSDPA serving cells. As used herein, a UE could be any mobile device, including, but not limited to, a data enabled cellular phone, a personal digital assistant, a laptop, a mobile station, among others.

Generally, a user equipment communicates with a Node B associated with a cell in which the UE is located. When the UE moves to an area that is not served by the Node B, a handover procedure is initiated. As discussed above, during HSDPA mode of operation, when a handover procedure occurs while the serving Node B has data buffered for the UE, a loss of performance ensues.

Specifically, the performance drop caused by a change in the serving HSDPA cell change can span from 5 to 20 seconds, depending on network loading and configuration. Using DCH mode of operation during frequent HSDPA serving cell changes bypasses deletion and re-establishment of HARQ processes and transfer of buffered data from one Node-B to another, circumventing additional jitter and latency to data transmission, thus improving user experience, especially for streaming services.

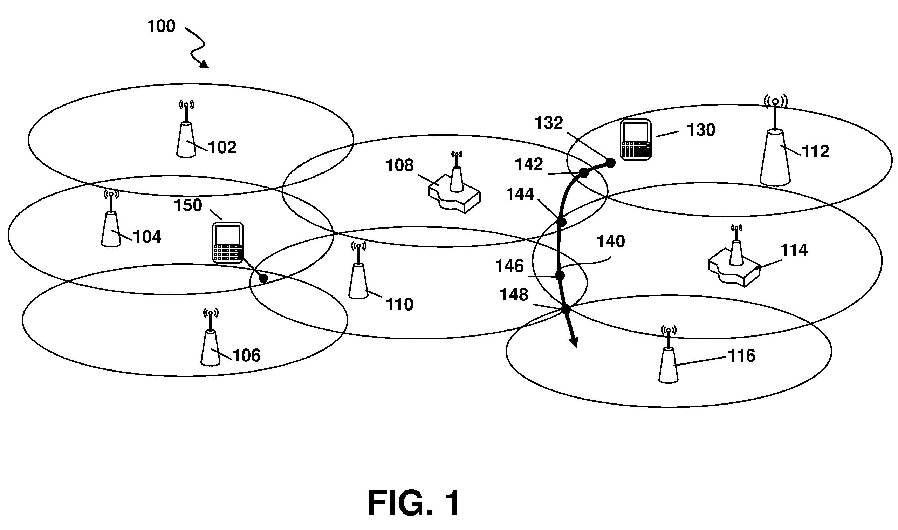

**Figure 1** illustrates different scenarios where a UE might frequently change cells, resulting in frequent serving HSDPA cell change procedures. In **Figure 1****,** a cellular network **100,** having cells **102, 104, 106, 108, 110, 112, 114** and **116** are shown. For the purposes of this example, it will be assumed that each of the cells **102-116** is served by a distinct Node B (not shown).

In one example, a UE **130** is located at a point **132,** in cell **112,** and travels cell **116** via path **140.** As can be seen from **Figure 1****,** the UE will cross cell boundaries and perform handovers at points **142, 144, 146,** and **148.** Assuming the UE is traveling at high speeds, for example if the UE is traveling in an automobile, the UE will have performed 4 handover procedures involving serving HSDPA cell change in a relatively short period of time.

In another example, a UE **150** is located in a boundary area between cells **104, 106** and **110.** Accordingly, even if the UE does not move very much or at high speeds, the UE may perform several handover procedures involving serving HSDPA cell change in a short period of time due to changing network conditions and the proximity to cell boundaries.

Because data is lost and HARQ processes are reset during each serving HSDPA cell change, the data performance of UE **130** or **150** may be worse in HSDPA mode of operation compared to legacy DCH mode of operation where the UE is allocated dedicated resources. The present disclosure provides methods for improving data performance for such UEs that frequently perform serving HSDPA cell change. The methods may be performed at the UE or may be performed a network element such as a Radio Network Controller (RNC).

### UE Determination

In one set of embodiments, the UE may make the determination that it is performing frequent serving HSDPA cell changes due to either moving quickly or being in a boundary region, and thus that the UE would prefer to be in a DCH mode of operation rather than in HSDPA mode of operation.

In one embodiment, the UE may rely on network signaling to identify itself as a UE which performs frequent serving HSDPA cell changes. For example, a UE may monitor the number of times it receives a *MAC-hs reset* indication within a period of time. In one example, if the UE receives 4 *MAC-hs reset* indications in 60 seconds, the UE is identified as a UE which performs frequent serving HSDPA cell changes. However, this example is not intended to be limiting and other means of determining that a UE performs frequent serving HSDPA cell changes based on network signaling is within the scope of the present disclosure.

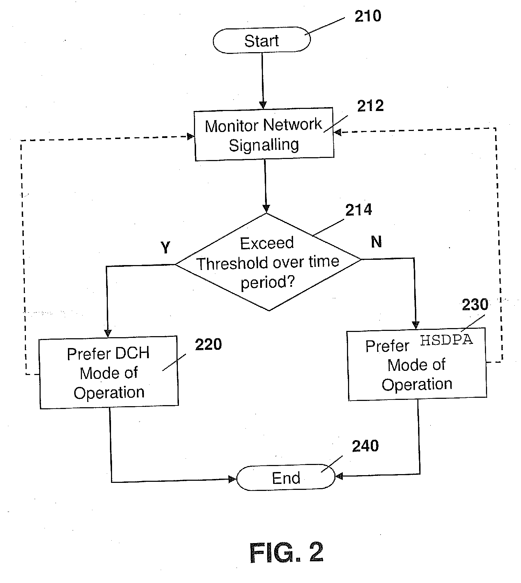

The above embodiments are illustrated with regard to **Figure 2****.** In **Figure 2****,** the process starts at block **210** and proceeds to block **212** in which the UE monitors network signaling. As indicated above, the network signaling might be MAC-hs reset indications, among others.

From block **212** the process proceeds to block **214** and determines whether the number of network signals monitored in block **212** has exceeded a threshold within a time period. For example, 4 MAC-hs reset indications within 60 seconds might cause the threshold to be exceeded. However, this is not limiting and the messages monitored, threshold and time period may be configured at the device at the time of manufacturing or dynamically by a carrier, network administrator or user of the UE.

From block **214,** if the threshold is exceeded for the time period, the process proceeds to block **220** in which the UE switches to use the DCH mode of operation. Conversely, if the threshold is not exceeded, the process proceeds to block **230** in which the UE prefers to remain in the HDSPA mode of operation.

From block **220** or **230** the process proceeds to block **240** and ends. In alternative embodiments the process may proceed from blocks **220** or **230** back to block **212** to continue to determine which type of network the UE prefers. In various embodiments, if the UE is in DCH mode of operation the threshold at block **212** may be different from the threshold if the UE is in an HSDPA mode of operation.

### Network Determination

The determination of whether a UE performs frequent serving HSDPA cell changes may be made at the network side rather than on the UE side.

In at least one embodiment, the RNC monitors how many serving HSDPA cell changes have occurred for each of the UEs it is currently serving. If a UE has experienced more serving HSDPA cell changes than a threshold in a given time period, the UE is determined to be a UE which performs frequent serving HSDPA cell changes. The value of the threshold and the length of the time period may be predetermined or selected by a carrier or network operator, for example.

For example, a time log from a commercial network might show the messages of **Table 1.**

**TABLE 1: Serving Node-B relocation message sequence**

| **Index** | **Time** | **RRC message** | **Notes** |
|---|---|---|---|
| 1 | 23:21:07.828 | measurementReport | Change of best frequency |
| 2 | 23:21:08.609 | physicalChannelReconfiguration | Mac-hsResetlndicator true |
| 3 | 23:21:22.46 | measurementReport | Change of best frequency |
| 4 | 23:21:22.656 | physicalChannelReconfiguration | Mac-hsResetlndicator true |
| 5 | 23:21:41.109 | measurementReport | Change of best frequency |
| 6 | 23:21:41.734 | physicalChannelReconfiguration | Mac-hsResetIndicator :: true |
| 7 | 23:22:17.906 | measurementReport | Change of best frequency |
| 8 | 23:22:18.546 | physicalChannelReconfiguration | Mac-hsResetIndicator :: true |
| 9 | 23:22:21.265 | measurementReport | Change of best frequency |
| 10 | 23:22:21.968 | physicalChannelReconfiguration | Mac-hsResetIndicator :: true |

**Table 1** shows 5 consecutive mac-hs-reset operations in around 70 seconds, which would cause HSDPA data performance to be lower than if the UE was connected to via DCH mode of operation.

In at least another embodiment, the RNC or another network element may determine that a UE performs frequent serving HSDPA cell changes by observing radio resource control (RRC) messages the network sent on the downlink to the UE. An example RRC message the RNC sends on the downlink to the UE is physicalChannelReconfiguration message with the setting Mac-hsResetlndicator set to TRUE.

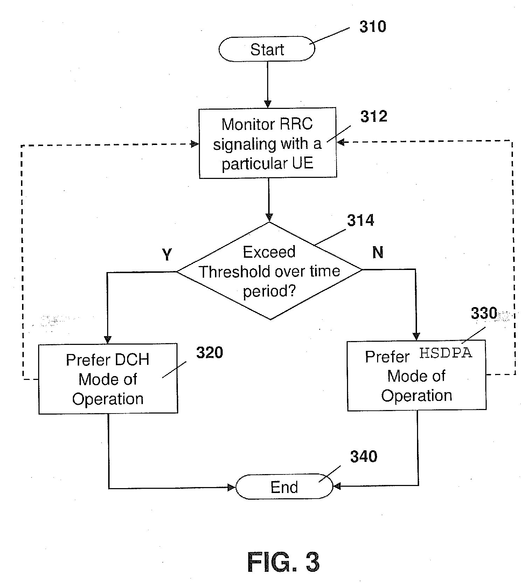

The above embodiments are illustrated with regard to **Figure 3****.** In **Figure 3****,** the process starts at block **310** and proceeds to block **312** in which the network monitors its own RRC signaling with a particular UE. As indicated above, the network signaling might be MAC-hs reset indications, among others.

From block **312** the process proceeds to block **314** and determines whether the number of signals monitored in block **312** has exceeded a threshold within a time period. For example, 4 MAC-hs reset indications sent by the network within 60 seconds might cause the threshold to be exceeded. However, this is not limiting and the messages monitored, threshold and time period may be configured at the network.

From block **314,** if the threshold is exceeded for the time period, the process proceeds to block **320** in which the network may prefer the UE to use the DCH mode of operation for data connectivity. Conversely, if the threshold is not exceeded, the process proceeds to block **330** in which the network prefers the UE to remain in the HDSPA mode of operation.

From block **320** or **330** the process proceeds to block **340** and ends. In alternative embodiments the process may proceed from blocks **320** or **330** back to block **312.**

The above procedures for determining that a UE frequently performs serving HSDPA cell changes are provided for illustrative purposes only, and the present disclosure is not limited to the above mentioned procedures.

Once it has been determined that the UE performs frequent serving HSDPA cell changes, either by the UE itself or by the network, in accordance with the present disclosure, the HSDPA mode of operation of the UE is disabled, so as to avoid the performance issues which occur in HSDPA connections on a UE which performs frequent serving HSDPA cell changes.

In the case where the UE has identified itself as frequently performing serving HSDPA cell changes, the UE may initiate the RRC procedure to disable HSDPA capability on the fly (during the connection). Similarly, when the network has determined that the UE performs frequent serving HSDPA cell changes, the network may initiate the procedure to disable HSDPA capability unilaterally.

The UE may disable its own HSDPA capability by using the Capability Update procedure, as outlined in the Third Generation Partnership Project (3GPP), Technical Specification (TS) 25.331, "Radio Resource Control, Protocol Specification", v.10.3.0, April 1, 2011. Specifically, the Capability Update procedure allows a UE to signal to the Universal Terrestrial Radio Access Network (UTRAN) what its capabilities are, via a UE CAPABILITY INFORMATION message. Accordingly, the UE may disable HSDPA by signaling to the UTRAN that it does not support HSPDA.

The UTRAN, having received the UE CAPABILITY INFORMATION message from the UE indicating that the UE does not support HSDPA, will determine that bearers for the UE must be reconfigured. In this case, the UTRAN (i.e., the RNC) will reallocate resources such that the UE will no longer have HSDPA resources assigned to it. Then, the UTRAN will respond to the UE with a UE CAPABILITY INFORMATION CONFIRM message.

The UTRAN may also initiate the procedure to disable HSDPA mode of operation for a UE unilaterally. The network may simply reconfigure its data bearers and reallocate resources so that the UE no longer has HSDPA resources assigned to it.

In at least one embodiment, the UE is maintained on DCH mode of operation until it is determined that the UE is no longer performing frequent serving HSDPA cell changes. Such a determination could occur in a similar fashion to the determination that the UE was performing frequent serving HSDPA cell changes.

The UE may determine that it has stopped performing frequent serving HSDPA cell changes based on network signaling. For example, a UE may monitor the number of times it receives a *MAC-hs reset* indication in RRC messages within a period of time. Thus, for example, if the UE receives less than 2 RRC messages with the *MAC-hs reset* parameter set to TRUE in 120 seconds, the UE is identified as a UE which does not perform frequent serving HSDPA cell changes. Notably, the conditions used to determine a UE has stopped performing frequent serving HSDPA cell changes do not necessarily mirror the conditions used to determine the UE was performing frequent serving HSDPA cell changes, although they may.

Alternatively, the determination that the UE has stopped performing frequent serving HSDPA cell changes may be made by a network element by monitoring the frequency of RRC messages including a *MAC-hs-reset* indication, the network element sends to the UE.

In at least one embodiment, the RNC may monitor the number of cell changes for each of the UEs it is serving for which the HSDPA capability has been disabled. If such a UE has experienced fewer serving HSDPA cell changes than a given threshold within a period of time, it will be deemed to have stopped performing frequent serving HSDPA cell changes. Again, the conditions used to determine that a UE has stopped performing frequent serving HSDPA cell changes do not necessarily mirror the conditions used to determine that the UE was performing frequent serving HSDPA cell changes.

In yet another embodiment, a UE for which the HSDPA capacity has been disabled could simply maintain the HSDPA capacity disabled for a known period of time. This period of time could be a constant, or it could be received from the network, or it could be a function of network characteristics such as average cell size in the area. In at least one embodiment, this period of time is a function of serving HSDPA cell change frequency. Other network characteristics would be known by those skilled in the art having regard to the present disclosure.

The RNC may also determine that a UE may re-activate the HSDPA mode of operation for any number of reasons, such as network traffic, network load, an amount of data intended for the UE, or other reasons.

The procedure for re-activating the HSDPA mode of operation is similar to the procedure for de-activating the HSDPA mode of operation described above. For example, if the UE decides to re-activate HSDPA, the UE may send a UE CAPABILITY INFORMATION message to the UTRAN indicating that the UE supports HSDPA feature. The response by the UTRAN would be to allocate HSDPA resources for the UE and send the UE a UE CAPABILITY INFORMATION CONFIRM message.

Similarly, if the network decides to re-activate HSDPA for the UE, it may simply allocate HSDPA resources for the UE unilaterally.

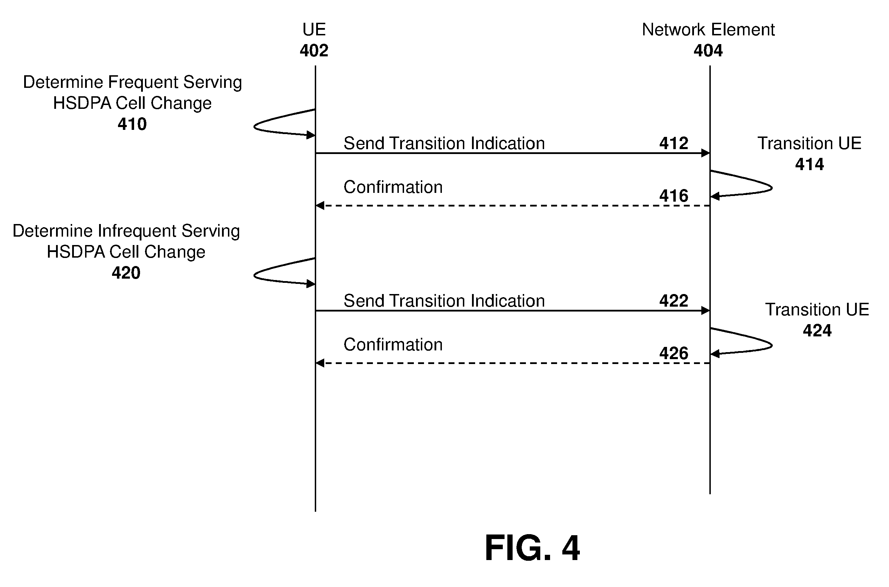

Reference is now made to **Figure 4****,** which shows a data flow diagram of the method in which decisions to de-activate or re-activate HSDPA mode of operation are taken at the UE.

In the embodiment of Figure 4, a UE **402** communicates with a network element 404, such as a Node B. As shown by arrow **410,** the UE **402** determines that it performs frequent serving HSDPA cell changes. As discussed above, the UE **402** can do this by monitoring the number of *MAC-hs reset* indications received during a given time, among others.

Once UE **402** determines that it performs frequent serving HSDPA cell changes, the UE then requests the network to disable HSDPA by sending a transition message, as shown by arrow **412,** to network node **404.** As discussed above, the transition message may be a UE CAPABILITY INFORMATION message. However, this is not limiting and any transition message could be used, including a new dedicated transition message, which could be created or any RAT specific RRC message performing a similar operation. Further existing messages may be used to piggyback transition indications. For example, the transition message at arrow **412** should indicate that the UE does not support the HSDPA mode of operation.

The network node **404** can then transition the UE, as shown by arrow **414,** and optionally respond with a confirmation message such as a UE CAPABILITY INFORMATION CONFIRM message, as shown by arrow **416.**

Once HSDPA mode of operation has been disabled for the UE, the UE then determines whether it has stopped performing frequent serving HSDPA cell changes, as shown by arrow **420.** In some embodiments, the check is omitted and the HSDPA mode of operation may be re-activated after some delay or based on some other factor.

If the UE **402** has stopped performing frequent serving HSDPA cell changes, the UE **402** sends the network node **404** a transition message, such as a UE CAPABILITY INFORMATION message, indicating that the UE does support the HSDPA feature, as shown by arrow **422.** The network node **404** responds by allocating HSDPA resources for the UE, as shown by arrow **424,** and optionally sends a confirmation, such as a UE CAPABILITY INFORMATION CONFIRM message, to UE **402,** as shown by arrow **426**.

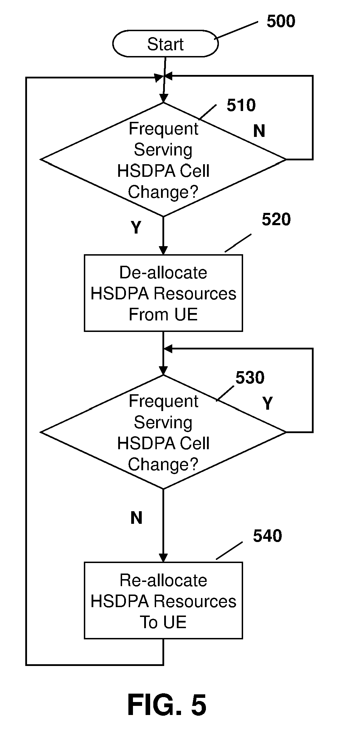

Reference is now made to **Figure 5****,** which shows a block diagram of the process in which decisions to de-activate or re-activate HSDPA mode of operation are taken at the network.

The process starts at **500** and proceeds to block **510** where the network determines whether the UE is performing frequent serving HSDPA cell changes. As discussed above, the network can do this by monitoring the number of cell changes experienced by the UE within a given time period.

If the UE does not perform frequent serving HSDPA cell changes, the process loops back to block **510.** Otherwise, the process proceeds to block **520** where the network disables the HSDPA mode of operation for the UE by de-allocating HSDPA resources from the UE. Then, at block **530,** the network checks whether the UE has stopped performing frequent handovers. In at least one embodiment, this step is omitted and the HSDPA mode of operation is reactivated for the UE after some delay or based on some other factor.

If the UE has not stopped performing frequent serving HSDPA cell changes, the process loops back to block **530.** Otherwise, the network reactivates HSDPA for the UE by allocating HSDPA resources for the UE, as shown by block **540.** The process then returns to block **510.**

The present method and apparatus further provide the benefit of improving the success rate of forward error control coding. In particular, as would be appreciated by those skilled in the art, the interleaving depth for DCH mode of operation is 10 milliseconds, while the interleaving depth for HSDPA mode of operation is 2 milliseconds. When a UE is moving at high speeds, greater interleaving depth helps to spread block errors in the data, thereby increasing the efficiency of forward error control coding. As in many cases a fast moving UE will be deemed to be frequently performing handovers, the present method and apparatus provide the additional benefit of providing greater interleaving depth for fast moving UEs.

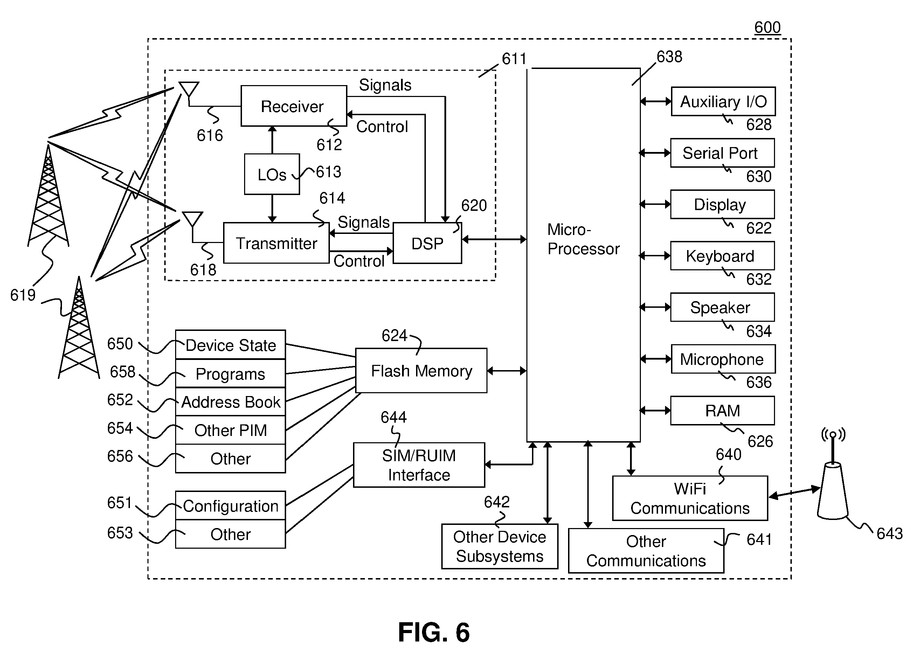

The above can be implemented on any UE and the present disclosure is not meant to be limited to any particular UE. One example of a UE on which the above could be implemented is shown below with regard to **Figure 6****.**

UE **600** is a two-way wireless communication device. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where UE **600** is enabled for two-way communication, it can incorporate a communication subsystem **611,** including both a receiver **612** and a transmitter **614,** as well as associated components such as one or more, antenna elements **616** and **618,** local oscillators (LOs) **613,** and a processing module such as a digital signal processor (DSP) **620** The particular design of the communication subsystem **611** depends upon the communication network in which the device is intended to operate.

When required network registration or activation procedures have been completed, UE **600** may send and receive communication signals over the network **619.** As illustrated in **Figure 6****,** network **619** can comprise of multiple base stations communicating with the UE.

Signals received by antenna **616** through communication network **619** are input to receiver **612,** which may perform such common receiver functions as signal amplification, frequency down conversion, filtering, channel selection and the like, and in the example system shown in **Figure 6****,** analog to digital (A/D) conversion. A/D conversion of a received signal allows more complex communication functions such as demodulation and decoding to be performed in the DSP **620.** In a similar manner, signals to be transmitted are processed, including modulation and encoding for example, by DSP **620** and input to transmitter **614** for digital to analog conversion, frequency up conversion, filtering, amplification and transmission over the communication network **619** via antenna **618.** DSP **620** not only processes communication signals, but also provides for receiver and transmitter control. For example, the gains applied to communication signals in receiver **612** and transmitter **614** may be adaptively controlled through automatic gain control algorithms implemented in DSP **620.**

Network access requirements will also vary depending upon the type of network **619.** In some networks network access is associated with a subscriber or user of UE **600.** A UE may require a removable user identity module (RUIM) or a subscriber identity module (SIM) card in order to operate on a network. The SIM/RUIM interface **644** is normally similar to a card-slot into which a SIM/RUIM card can be inserted and ejected. The SIM/RUIM card hold many key configurations **651,** and other information **653** such as identification, and subscriber related information.

UE **600** includes a processor **638** which controls the overall operation of the device. Communication functions, including at least data and voice communications, are performed through communication subsystem **611.** Processor **638** also interacts with further device subsystems such as the display **622,** flash memory **624,** random access memory (RAM) **626,** auxiliary input/output (I/O) subsystems **628,** serial port **630,** one or more keyboards or keypads **632,** speaker **634,** microphone **636,** other communication subsystem **640** such as a short-range communications subsystem and any other device subsystems generally designated as **642.** Serial port **630** could include a USB port or other port known to those in the art.

Some of the subsystems shown in **Figure 6** perform communication-related functions, whereas other subsystems may provide "resident" or on-device functions. Notably, some subsystems, such as keyboard **632** and display **622,** for example, may be used for both communication-related functions, such as entering a text message for transmission over a communication network, and device-resident functions such as a calculator or task list.

Operating system software used by the processor **638** can be stored in a persistent store such as flash memory **624,** which may instead be a read-only memory (ROM) or similar storage element (not shown). Specific device applications, or parts thereof, may be temporarily loaded into a volatile memory such as RAM **626.** Received communication signals may also be stored in RAM **626.**

As shown, flash memory **624** can be segregated into different areas for both computer programs **658** and program data storage **650, 652, 654** and **656.** These different storage types indicate each program can allocate a portion of flash memory **624** for their own data storage requirements. Processor **638,** in addition to its operating system functions, can enable execution of software applications on the UE. A predetermined set of applications which control basic operations, including at least data and voice communication applications for example, will normally be installed on UE **600** during manufacturing. Other applications could be installed subsequently or dynamically.

A software application may be a personal information manager (PIM) application having the ability to organize and manage data items relating to the user of the UE such as, but not limited to, e-mail, calendar events, voice mails, appointments, and task items. Naturally, one or more memory stores would be available on the UE to facilitate storage of PIM data items. Such PIM application can have the ability to send and receive data items, via the wireless network **619.** In an embodiment, the PIM data items are seamlessly integrated, synchronized and updated, via the wireless network **619,** with the UE user's corresponding data items stored or associated with a host computer system. Further applications may also be loaded onto the UE **600** through the network **619,** an auxiliary I/O subsystem **628,** serial port **630,** short-range communications subsystem **640** or any other suitable subsystem **642,** and installed by a user in the RAM **626** or a non-volatile store (not shown) for execution by the microprocessor **638.** Such flexibility in application installation increases the functionality of the device and may provide enhanced on-device functions, communication-related functions, or both.

In a data communication mode, a received signal such as a text message or web page download will be processed by the communication subsystem **611** and input to the microprocessor **638,** which further processes the received signal for element attributes for output to the display **622,** or alternatively to an auxiliary I/O device **628.**

A user of UE **600** may also compose data items such as email messages for example, using the keyboard **632,** which can be a complete alphanumeric keyboard or telephone-type keypad, in conjunction with the display **622** and possibly an auxiliary I/O device **628.** Such composed items may then be transmitted over a communication network through the communication subsystem **611.**

For voice communications, overall operation of UE **600** is similar, except that received signals would be output to a speaker **634** and signals for transmission would be generated by a microphone **636.** Alternative voice or audio I/O subsystems, such as a voice message recording subsystem, may also be implemented on UE **600.** Although voice or audio signal output is accomplished primarily through the speaker **634,** display **622** may also be used to provide an indication of the identity of a calling party, the duration of a voice call, or other voice call related information for example.

Serial port **630** in **Figure 6** would normally be implemented in a personal digital assistant (PDA)-type UE for which synchronization with a user's desktop computer (not shown) may be desirable, but is an optional device component. Such a port **630** would enable a user to set preferences through an external device or software application and would extend the capabilities of UE **600** by providing for information or software downloads to UE **600** other than through a wireless communication network. The alternate download path may for example be used to load an encryption key onto the device through a direct and thus reliable and trusted connection to thereby enable secure device communication. Serial port **630** can further be used to connect the UE to a computer to act as a modem.

WiFi Communications Subsystem **640** is used for WiFi Communications and can provide for communication with access point **640.**

Other communications subsystem(s) **641,** such as a short-range communications subsystem, are further components that may provide for communication between UE **600** and different systems or devices, which need not necessarily be similar devices. For example, the subsystem(s) **141** may include an infrared device and associated circuits and components or a Bluetooth™ communication module to provide for communication with similarly enabled systems and devices.

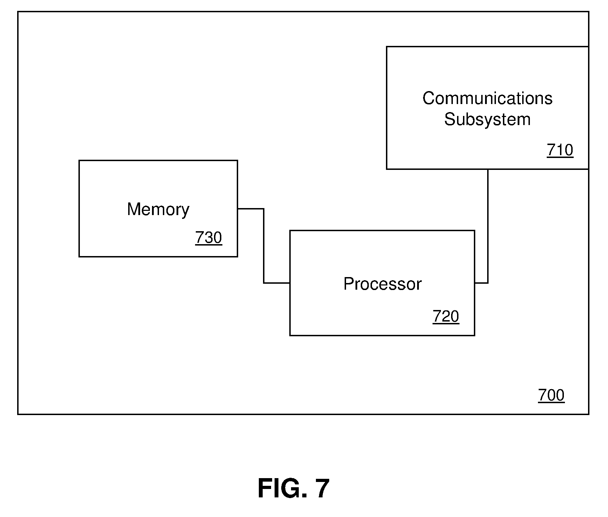

A simplified network node **700** is illustrated with regard to **Figure 7****.** In the embodiment of **Figure 7****,** a communications subsystem **710** is configured to communicate with other network elements and with UEs, for example through base stations.

A processor **720** communicates with communications subsystem **710** and is configured to perform the processes of, for example, **Figure 3** and **5****,** among others.

A memory **730** is configured to store information at the network node 700 and can be accessed by processor **720.**

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method, at a user equipment "UE" (402), for High Speed Downlink Packet Access "HSDPA" de-activation, comprising:
determining whether a number of serving HSDPA cell changes of the UE (402) exceeds a threshold within a first time period, said determining comprising monitoring of network signaling;
if yes, sending a first transition indication from the UE (402) to a network node (404) to deactivate HSDPA; and
after a second time period, sending a second transition indication to the network node (404) to reactivate HDSPA, wherein the second time period is one of a constant, a parameter signaled by the network, or a function of HSDPA cell change frequency;
wherein the first transition indication (412) indicates that the UE does not support HSDPA and the second transition indication (422) indicates that the UE supports HSDPA.

2. The method of claim 1, wherein the determining step monitors the number of MAC-HS RESET indications received at the UE (402).

3. The method of claim 2, wherein the threshold is exceeded if the number of MAC-HS RESET indications within a period of time is greater than a threshold.

4. The method of any one of claims 1 to 3, wherein the first transition indication and the second transition indication are a UE CAPABILITY INFORMATION messages.

5. A method, at a network node (404), for High Speed Downlink Packet Access "HSDPA" de-activation, comprising:
determining whether a number of serving HSDPA cell changes of a user equipment "UE" (402) communicating with the network node (404) exceeds a threshold within a firsttime period; and;
if yes, deactivating HSDPA for the UE (402);
after the deactivation of the HSDPA:
finding whether a number of serving HSDPA cell changes for the UE (402) is below a second threshold for a second time period; and
if yes, reactivating HDSPA for the UE (402).

6. The method of claim 6, wherein the network node is a Radio Network Controller "RNC".

7. The method of claim 6 or 7, wherein the threshold is a constant.

8. A user equipment (UE) (402) adapted for High Speed Downlink Packet Access HSDPA activation and de-activation comprising:
a communication subsystem;
a processor;
wherein the communication subsystem and the processor cooperate to perform the method of any one of claims 1 to 4.

9. A network element (404) adapted for High Speed Downlink Packet Access HSDPA activation and de-activation, the network element being configured to perform the method of any one of claims 5 to 8.

## Patentansprüche

1. Verfahren, an einer Nutzerausrüstung "UE" (402), zur "HSDPA" (High Speed Downlink Packet Access) -Deaktivierung, umfassend:
Bestimmen, ob eine Anzahl von bedienenden HSDPA Zelländerungen der UE (402) einen Grenzwert innerhalb einer ersten Zeitspanne überschreitet, wobei dieses Bestimmen das Überwachen von Netzsignalisierung umfasst;
falls ja, Senden eines ersten Übergangsindikators von der UE (402) an einen Netzknoten (404), um HSDAP zu deaktivieren; und
nach einer zweiten Zeitspanne, Senden eines zweiten Übergangindikators an den Netzknoten (404), um HSDAP zu reaktivieren, wobei die zweite Zeitspanne eine Konstante oder ein durch das Netz signalisierter Parameter oder eine Funktion einer HSDAP Zelländerungsfrequenz ist;
wobei der erste Übergangsindikator (412) aufzeigt, dass die UE HSDAP nicht unterstützt und der zweite Übergangsindikator (422) aufzeigt, dass die UE HSDAP unterstützt.

2. Verfahren nach Anspruch 1, wobei der Bestimmungsschritt die Anzahl von MAC-HS RESET Indikatoren, die an der UE (402) empfangen werden, überwacht.

3. Verfahren nach Anspruch 2, wobei der Grenzwert überschritten ist, falls die Anzahl von MAC-HS RESET Indikatoren innerhalb einer Zeitspanne größer ist als ein Grenzwert.

4. Verfahren nach einem der Ansprüche 1 bis 3, wobei es sich bei dem ersten Übergangsindikator und dem zweiten Übergangsindikator um eine UE CAPABILITY INFORMATION-Nachricht handelt.

5. Verfahren, an einem Netzknoten (404) zur HSDAP -Deaktivierung, umfassend:
Bestimmen, ob eine Anzahl von bedienenden HSDAP Zellenänderungen einer Nutzerausrüstung "UE" (402), die mit dem Netzknoten (404) kommuniziert, einen Grenzwert innerhalb einer ersten Zeitspanne überschreitet; und
falls ja, Deaktivieren von HSDPA für die UE (402);
nach der Deaktivierung von HSDAP:
Herausfinden, ob eine Anzahl von bedienenden HSDAP Zelländerungen für die UE (402) unterhalb eines zweiten Grenzwerts für eine zweite Zeitspanne ist; und
falls ja, Reaktivieren des HDSPA für die UE (402).

6. Verfahren nach Anspruch 6, wobei der Netzknoten ein Funknetz-Controller "RNC" ist.

7. Verfahren nach Anspruch 6 oder 7, wobei der Grenzwert eine Konstante ist.

8. Nutzerausrüstung (UE) (402), die für HSDPA-Aktivierung und -Deaktivierung eingerichtet ist, umfassend:
ein Kommunikationssubsystem;
einen Prozessor;
wobei das Kommunikationssubsystem und der Prozessor zusammenwirken, um das Verfahren nach einem der Ansprüche 1 bis 4 durchzuführen.

9. Netzeinrichtung (404), das für High Speed Downlink Packet Access HSDPA Aktivierung und Deaktivierung eingerichtet ist, wobei die Netzeinrichtung konfiguriert ist, das Verfahren nach einem der Ansprüche 5 bis 8 durchzuführen.

## Revendications

1. Procédé exécuté sur un équipement utilisateur (402) pour la désactivation de l'accès descendant à haut débit en mode paquets, HSDPA pour « *High Speed Downlink Packet Access* », comprenant les étapes consistant à :
déterminer si un nombre de changement de cellules de desserte HSDPA par l'équipement utilisateur (402) dépasse un seuil sur une première période de temps, ladite étape de détermination comprenant la surveillance de la signalisation du réseau ;
si tel est le cas, envoyer une première indication de transition entre l'équipement utilisateur (402) et un noeud de réseau (404) afin de désactiver l'accès HSDPA ; et
après une seconde période de temps, envoyer une seconde indication de transition au noeud de réseau (404) pour réactiver l'accès HSDPA, la seconde période de temps étant soit une constante, soit un paramètre signalé par le réseau, soit une fonction de la fréquence de changement de cellule HSDPA ;
dans lequel la première indication de transition (412) indique que l'équipement utilisateur ne supporte pas l'accès HSDPA et la seconde indication de transition (422) indique que l'équipement utilisateur supporte l'accès HSDPA.

2. Procédé selon la revendication 1, dans lequel l'étape de détermination surveille le nombre des indications MAC-HS RESET reçues par l'équipement utilisateur (402).

3. Procédé selon la revendication 2, dans lequel le seuil est dépassé si le nombre des indications MAC-HS RESET au cours d'une période est supérieur à un certain seuil.

4. Procédé selon l'une quelconque des revendications 1 à 3, dans lequel la première indication de transition et la seconde indication de transition sont un message UE CAPABILITY INFORMATION.

5. Procédé exécuté sur un noeud de réseau (404) pour la désactivation de l'accès descendant à haut débit en mode paquets, HSDPA pour « *High Speed Downlink Packet Access* », comprenant les étapes consistant à :
déterminer si un nombre de changement de cellules de desserte HSDPA par un équipement utilisateur (402) qui communique avec le noeud de réseau (404) dépasse un seuil sur une première période de temps ;
si tel est le cas, désactiver l'accès HSDPA ;
après la désactivation de l'accès HSDPA :
déterminer si un nombre de changement de cellule HSDPA de desserte par l'équipement utilisateur (402) est inférieur à un second seuil au cours d'une seconde période de temps ; et
si tel est le cas, réactiver l'accès HSDPA pour l'équipement utilisateur (402).

6. Procédé selon la revendication 6, dans lequel le noeud de réseau est un contrôleur de réseau radio.

7. Procédé selon la revendication 6 ou 7, dans lequel le seuil est une constante.

8. Équipement utilisateur (402) conçu pour l'activation et la désactivation de l'accès descendant à haut débit en mode paquets, HSDPA pour « *High Speed Downlink Packet Access* », comprenant :
un sous-système de communication ;
un processeur ;
dans lequel le sous-système de communication et le processeur coopèrent pour exécuter le procédé selon l'une quelconque des revendications 1 à 4.

9. Élément de réseau (404) conçu pour l'activation et la désactivation de l'accès descendant à haut débit en mode paquets, HSDPA pour « *High Speed Downlink Packet Access* »*,* l'élément de réseau étant configuré pour exécuter le procédé selon l'une quelconque des revendications 5 à 8.
